(19) Europäisches Patentamt
European Patent Office
Office européen des brevets

(11) **EP 2 615 486 B1**

(12) **FASCICULE DE BREVET EUROPEEN**

(45) Date de publication et mention de la délivrance du brevet:
**02.03.2022 Bulletin 2022/09**

(21) Numéro de dépôt: **13305024.5**

(22) Date de dépôt: **11.01.2013**

(51) Classification Internationale des Brevets (IPC):
**G02B 27/09** (2006.01)    **G02B 6/00** (2006.01)
**H01S 3/00** (2006.01)    **B23K 26/06** (2014.01)

(52) Classification Coopérative des Brevets (CPC):
**G02B 27/09; B23K 26/073; G02B 27/0927;**
**G02B 27/0994;** H01S 3/094057

(54) **Dispositif de mise en forme des rayons lumineux d'un faisceau laser**

Laserstrahlformungsgerät

Laser beam shaping apparatus

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.01.2012 FR 1250286**

(43) Date de publication de la demande:
**17.07.2013 Bulletin 2013/29**

(73) Titulaire: **Irepa Laser**
**67400 Illkirch-Graffenstaden (FR)**

(72) Inventeurs:
• **Vetter, Pierre-Alain**
**67120 ALTORF (FR)**

• **Bernard, Eric**
**67100 STRASBOURG (FR)**
• **Engel, Thierry**
**67100 STRASBOURG (FR)**

(74) Mandataire: **Cabinet Nuss**
**10, rue Jacques Kablé**
**67080 Strasbourg Cedex (FR)**

(56) Documents cités:
JP-A- 2006 251 459    US-A1- 2005 046 807
US-A1- 2005 079 645    US-A1- 2006 262 408
US-A1- 2009 174 867    US-B1- 6 554 464

**Description**

La présente invention se rapporte au domaine des systèmes de mise en forme de faisceaux laser et plus particulièrement au domaine du contrôle de la répartition énergétique et de la divergence de faisceaux laser.

Actuellement, le laser est devenu un outil couramment utilisé dans l'industrie. Pour certaines applications, il est nécessaire que l'image du faisceau lumineux ait des caractéristiques de forme particulières tout en présentant une répartition homogène de la puissance sur l'ensemble du spot produit. Par exemple, dans le cadre d'une trempe laser, une homogénéité est requise dans la répartition énergétique du faisceau lumineux. Par ailleurs, il peut être nécessaire d'avoir un faisceau dont la profondeur de champ soit adaptée aux applications, par exemple plusieurs dizaines de millimètres dans le cas de pièces épaisses.

Actuellement, il existe différents dispositifs optiques qui permettent de traiter les rayons d'un faisceau laser afin d'obtenir des caractéristiques optiques, énergétiques et géométriques particulières. Toutefois, il convient de noter que ces dispositifs font intervenir des montages complexes de lentilles qui ne permettent pas de répondre simultanément aux besoins conjugués de mise en forme, d'homogénéité énergétique et de profondeur de champ. La publication américaine US 2009/174867 A1 divulgue un dispositif de mise en forme des rayons lumineux.

La présente invention a pour but de proposer un dispositif simplifié permettant la mise en forme des rayons d'un faisceau laser en vue d'obtenir un faisceau lumineux aux caractéristiques optiques de forme, de répartition énergétique et de profondeur de champ particulières permettant notamment l'obtention d'un faisceau lumineux dont ces caractéristiques sont homogènes et identiques en différentes sections le long du faisceau émergent 9 du dispositif.

Cet objectif est atteint grâce à un dispositif de mise en forme des rayons lumineux d'un faisceau laser selon la revendication 1. Des modes de réalisation additionnels sont définis dans les revendications dépendantes.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

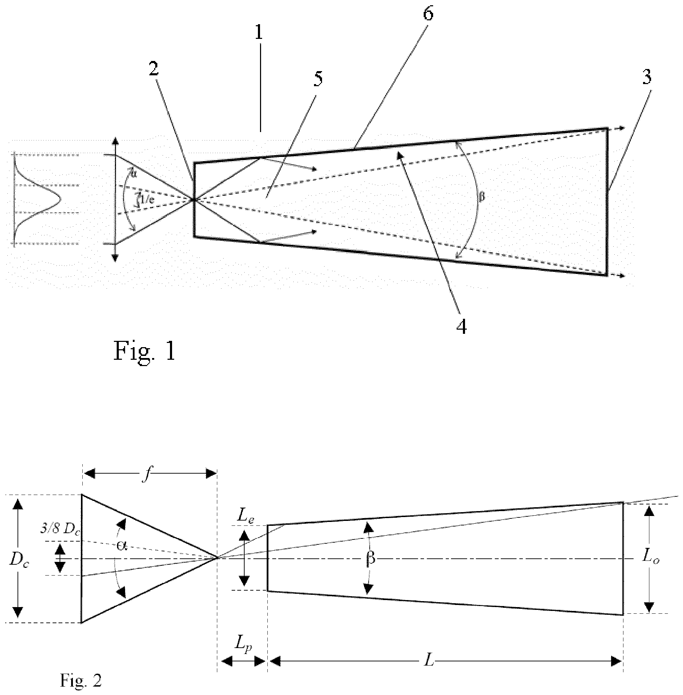

- la figure 1 correspond à des exemples de réflexion de différents rayons d'un même faisceau laser dans un dispositif de mise en forme de l'invention,
- la figure 2 présente certains paramètres géométriques influents du dispositif de mise en forme de l'invention et du faisceau laser incident,

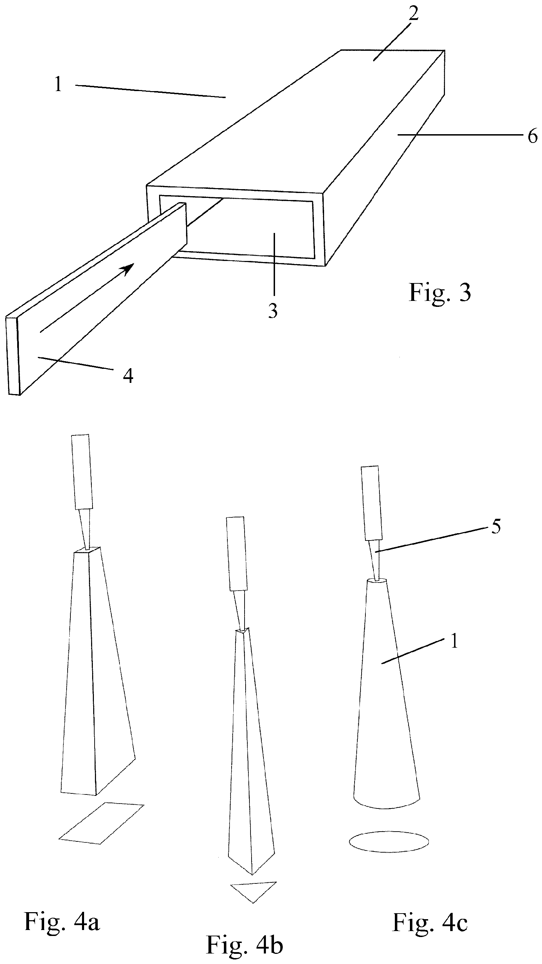

- la figure 3 présente un exemple de réalisation de la paroi interne du dispositif de mise en forme de l'invention,

- les figures 4a, 4b et 4c présentent des exemples de mise en forme d'un faisceau laser par différentes configuration d'un dispositif selon l'invention,
- la figure 5 présente un exemple de réalisation d'un dispositif selon l'invention en fonctionnement comportant un orifice de sortie de section tronqué de façon non perpendiculaire à l'axe du faisceau, le dispositif comportant un axe qui n'est pas nécessairement normale à la surface de la pièce,
- la figure 6 présente un exemple de système de mise en forme selon l'invention,
- la figure 7 représente un exemple de répartition de l'intensité du rayonnement d'un faisceau laser gaussien incident dans une section du faisceau, l'axe des abscisses définissant la distance radiale à partir du centre du faisceau où l'intensité est maximale, soit $I_0$,
- la figure 8 représente, d'une part, en trait continu, la répartition de l'intensité du rayonnement théorique et, d'autre part, en trait discontinu, la répartition de l'intensité du rayonnement obtenue expérimentalement en sortie de guide, après homogénéisation,
- la figure 9 représente un exemple de faible divergence obtenue en différentes sections du faisceau ainsi que les profils d'intensité obtenus sur ces sections,
- la figure 10 représente un exemple de sections non perpendiculaires du faisceau émergent, sections dans lesquelles la distribution d'intensité obtenue est quasi-constante.

Le dispositif de l'invention est un dispositif 1 de mise en forme des rayons lumineux d'un faisceau laser qui le traverse, caractérisé en ce que le dispositif de mise en forme est formé par un conduit comportant un orifice 2 d'entrée, un orifice 3 de sortie et une paroi 4 interne, réalisée par une ou plusieurs facettes, adaptée pour réorienter par au moins une réflexion au moins une partie des rayons du faisceau traversant.

Ce dispositif 1 met en forme les rayons lumineux du faisceau laser en permettant une réorientation par réflexion contrôlée d'au moins une partie des rayons du faisceau qui traverse le dispositif 1. Le faisceau laser ainsi remis en forme présente alors des caractéristiques dimensionnelles, une profondeur de champ et une répartition énergétique différente de celles du faisceau laser qui entre dans le dispositif 1. Le faisceau laser incident est préférentiellement de type gaussien avec une longueur d'onde comprise entre l'ultra-violet et l'infrarouge lointain. Par ailleurs, ce faisceau laser peut être continu ou impulsionnel.

Selon une particularité de réalisation, non limitatif de l'invention, le conduit présente préférentiellement un axe rectiligne qui forme la direction de projection du faisceau laser en sortie de dispositif 1.

Le dispositif 1 de mise en forme fonctionne par réflexion de la partie périphérique du faisceau laser, de sorte que le rapport entre cette partie et une surface d'une section du faisceau laser définit les propriétés optiques, géométriques et énergétiques du faisceau laser souhaitées en sortie du dispositif 1 de mise en forme. Pour aboutir à un faisceau laser sortant qui présente des caractéristiques de forme, de répartition énergétique et de profondeur de champ bien définies, la remise en forme du faisceau laser incident fait intervenir un arrangement combiné de plusieurs des caractéristiques géométriques du dispositif 1 de mise en forme et cela en fonction d'au moins une caractéristique du faisceau laser incident, telle que, par exemple, la puissance, la longueur d'onde le diamètre du faisceau, la focale, etc. Ainsi, les caractéristiques géométriques du dispositif 1 de mise en forme prises en considération peuvent être sélectionnées dans une liste comprenant au moins :

- la dimension Le et le profil d'ouverture de l'orifice 2 d'entrée du dispositif 1,
- la dimension Lo et le profil d'ouverture de l'orifice 3 de sortie du dispositif 1,
- la forme de l'orifice 3 de sortie du dispositif 1,
- la longueur L du dispositif 1,
- la position du point de focalisation du faisceau laser 5 à l'entrée 2 du dispositif 1,
- l'angle $\alpha$ de focalisation du faisceau laser 5 à l'entrée 2 du dispositif 1,
- la structure géométrique ou la forme du conduit réalisant un guide d'onde.

Bien que la structure géométrique ou la forme du conduit soit expliqué dans la suite du présent document, ce conduit peut être représenté comme un tube creux de section variable, par exemple elliptique ou rectangulaire.

Il convient toutefois de noter que, selon un mode de réalisation préféré de l'invention, d'une part, les dimensions Le d'entrée et Lo de sortie du dispositif 1 sont non nulles et que, d'autre part, la dimension Le d'entrée est inférieure à la dimension Lo de sortie du dispositif 1 de sorte que les faces internes du dispositif 1 ne sont pas parallèles entre elles et réalisent, l'une par rapport à l'autre, un angle d'ouverture $\beta$.

Le dispositif 1 de mise en forme de l'invention est donc défini, construit et adapté en fonction d'au moins une caractéristique du faisceau laser 5 souhaitée en sortie du dispositif 1 ou au point d'interaction du faisceau lumineux avec la surface d'une structure particulière, (homogénéité énergétique du faisceau, forme du faisceau, etc.)

Il convient de noter que d'autres paramètres et caractéristiques du dispositif 1 de mise en forme peuvent être considérés, comme notamment les propriétés d'absorption et de réflexion du matériau qui constitue le dispositif 1, l'état de surface des faces réfléchissantes ou la structuration de ces faces. Concernant cette structuration des faces, celle-ci peut être utilisée pour une mise en forme plus complexe du faisceau. Par exemple lorsque la structuration se présente comme un assemblage de type multi-facettes.

Le dispositif 1 de mise en forme des rayons lumineux a donc pour objet d'être positionné en aval d'une source laser. Selon un mode de réalisation préféré non limitatif de l'invention, les rayons du faisceau laser 5 sont concentrés dans le dispositif 1 de mise en forme par une lentille convergente. Le faisceau laser 5 est alors focalisé aux abords de l'orifice d'entrée 2 du dispositif 1. Cette focalisation permet au dispositif 1 d'agir sur au moins une partie des rayons du faisceau laser 5 et de permettre la mise en forme sur toute la section du faisceau laser émis. L'association du dispositif 1 de mise en forme des rayons lumineux avec une lentille convergente réalise un ensemble de mise en forme des rayons du faisceau 5.

Selon un mode de réalisation particulier de l'invention, le dispositif 1 de mise en forme de l'invention est adapté pour permettre une mise en forme du faisceau 5 en opérant au plus une seule et unique réflexion sur une partie des rayons du faisceau laser incident.

Selon le mode de réalisation principal de l'invention, le dispositif 1 de mise en forme de l'invention est adapté pour permettre une mise en forme du faisceau 5 en opérant au plus une seule et unique réflexion pour chacun des rayons du faisceau laser incident, cette unique réflexion pouvant ne concerner qu'une partie des rayons du faisceau laser incident. La longueur L du dispositif 1 est alors définie pour qu'en combinaison avec l'angle d'ouverture $\beta$, chacun des rayons du faisceau laser incident ne soit réfléchi au plus une seule et unique fois.

Cette limitation du nombre de réflexions des rayons du faisceau permet de réduire les pertes d'énergie lors de la répartition des rayons du faisceau et donc d'obtenir un rendement énergétique maximum de la mise en forme du faisceau laser 5.

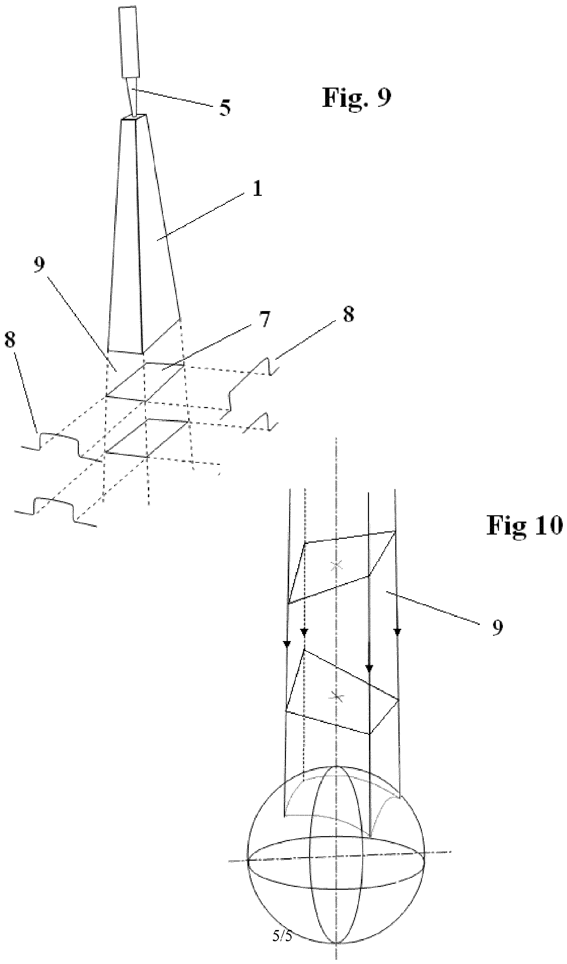

L'angle d'ouverture $\beta$ du dispositif 1 permet de garantir une homogénéité directionnelle et donc géométrique du faisceau laser en sortie du dispositif. La limitation du nombre de réflexions de chacun des rayons qui composent ce faisceau laser en sortie garantit une homogénéité énergétique de ce faisceau. L'homogénéité est alors obtenue en différentes sections 7 du faisceau ainsi que les profils d'intensité 8 obtenus sur ces sections 7 du faisceau laser comme illustrée sur la figure 9. De même, les caractéristiques géométriques tridimensionnelles de ce faisceau peuvent être définies de façons particulières en différentes sections d'une profondeur de champ du faisceau laser, sections sur laquelle une répartition énergétique est rendue par le choix des dimensions du guide adaptées aux caractéristiques du laser. Le choix des dimensions du guide est obtenu par une optimisation multi-paramètres de la distribution énergétique obtenue en sortie. Ainsi, dans un exemple d'application, le faisceau laser émergent 9 dans un volume peut être arrangé pour présenter une densité d'énergie sur une surface non-plane permettant de traiter, par exemple, une surface rectangulaire d'une pièce sphérique, comme illustré sur la figure 10.

Selon un mode de réalisation particulier non-limitatif de l'invention, le dispositif 1 de mise en forme est arrangé pour réorienter la partie des rayons du faisceau laser incident 5 qui est située sur la périphérie du faisceau laser 5. Selon un mode de réalisation préféré, cette partie réfléchie des rayons du faisceau 5 peut être définie de sorte que le rapport énergétique entre les parties non-réfléchie et réfléchie du faisceau, c'est-à-dire le rapport entre la partie centrale du faisceau qui est non-réfléchie et la section globale du faisceau limite les variations d'intensité obtenues en sortie de guide.

Une approche théorique basée sur l'étude de la distribution d'intensité en sortie du guide permet de définir des conditions de conception optimales.

Dans le principe, on calcule l'intégrale de l'intensité du faisceau d'origine que l'on assimile à celle d'un faisceau homogène de dimension caractéristique $x_c$. Le calcul donne comme résultat un rapport $x_c/r_0 \approx 0,37$ dans lequel :

- $x_c$ est la dimension caractéristique du faisceau selon une section correspondant à un profil d'intensité plat (rayon ou largeur selon le profil du guide),
- $r_0$ est le rayon défini à $I_0/e^2$, $I_0$ étant l'intensité maximale au centre du faisceau incident.

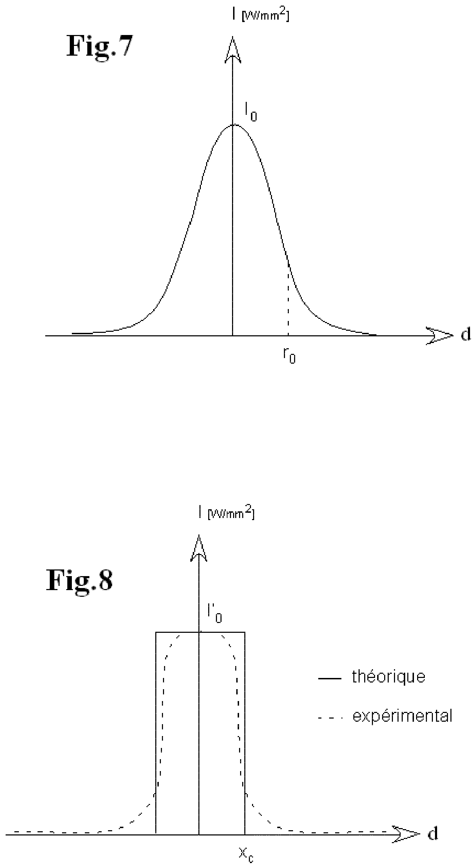

En dehors de cette valeur optimale, le profil présente des écarts qui peuvent toutefois être compatibles avec un fonctionnement correct de l'invention. Une illustration des paramètres $r_0$ et $x_c$ est donnée sur les figures 7 et 8.

La valeur de ce rapport peut ainsi s'écarter de la valeur optimale 0,37, être comprise préférentiellement entre 0,30 et 0,45 voire entre 0,12 et 0,62.

Dans le cas, par exemple, d'une répartition énergétique des rayons du faisceau laser 5 considérée, lors de l'émission, de type gaussien; le profil énergétique se trouve centré sur le centre du faisceau laser émis. La remise en forme opérée par le dispositif 1 de l'invention permet une réorganisation de la répartition énergétique. Les rayons lumineux du faisceau 5 réorientés par réflexion sont situés sur la périphérie du faisceau émis. Ces rayons périphériques sont alors réorientés par le dispositif 1 de l'invention vers le centre de la gaussienne permettant une remise en forme du faisceau 5. Selon une particularité de réalisation qui n'est pas limitative de l'invention, cette remise en forme du faisceau permet, à partir d'une répartition énergétique gaussienne, d'obtenir une répartition énergétique homogène avec un signal formant un plateau (*top hat*). Cette mise en forme du faisceau laser 5 par réarrangement des rayons du faisceau laser permet la répartition de l'énergie du faisceau laser émis sur l'ensemble de la surface de la section du faisceau. Cette répartition énergétique est donc clairement plus aisée que dans le cadre d'une utilisation de miroirs ou d'optiques réfractives et moins onéreuse que des optiques diffractives. Ces dernières sont en outre des éléments de haute précision, fragiles et qui nécessitent une mise en œuvre très minutieuse.

Dans le dispositif 1 de mise en forme de l'invention, les rayons du faisceau laser 5 qui convergent aux abords de l'orifice 2 d'entrée du dispositif 1 sont divergents au-delà du point de focalisation. Cette divergence d'un rayon du faisceau 5, à l'intérieur du dispositif 1, peut être mesurée par un l'angle d'ouverture du faisceau $\alpha$ défini par ses rayons extrêmes obtenus après focalisation. La réflexion de ces rayons par la paroi interne du dispositif 1 de mise en forme impose que l'angle $\alpha$ soit supérieur à l'angle $\alpha$ limite $\alpha_L$ défini par une relation trigonométrique faisant intervenir les dimensions géométriques du guide (longueur L, angle d'ouverture $\beta$, dimensions d'entrée Le et de sortie Lo) et la position relative du point focal du faisceau avec l'entrée du guide (Lp) entre l'axe moyen du dispositif 1 de mise en forme et l'axe de la paroi interne 4 du dispositif 1 contre laquelle le rayon est réfléchi. Le dispositif 1 de l'invention et notamment l'angle $\beta$ du dispositif 1 est ainsi défini de telle sorte que les rayons réfléchis sur la paroi interne 4 du dispositif 1 soient orientés vers l'orifice 3 de sortie du dispositif 1 sans possibilité de retour vers l'orifice 2 d'entrée du dispositif 1. L'angle $\beta$ est ainsi conditionné par l'angle $\alpha$ de focalisation du faisceau laser incident ainsi que par la position du point de focalisation en amont de l'entrée du dispositif.

La réflexion d'une partie des rayons du faisceau laser 5 permet une réorientation de ces rayons selon un axe sensiblement parallèle ou présentant une divergence réduite par rapport à l'axe du dispositif 1 de remise en forme. Cette réorientation des rayons, réalisée de telle sorte qu'en sortie 3 du dispositif 1 ces rayons soient parallèles entre eux, permet d'obtenir un faisceau laser 5 sortant qui adopte la forme de l'orifice 3 de sortie du dispositif 1 de l'invention. Par ailleurs, la réalisation d'un faisceau laser 5 en sortie 3 de dispositif qui présente des rayons lumineux sensiblement parallèles entre eux permet l'obtention d'un faisceau 5 comportant une profondeur de champ importante.

La divergence du faisceau est inférieure à 200 mrad, préférentiellement inférieure à 100 mrad, optimalement inférieure à 10 mrad et idéalement 0 mrad.

Lors de la mise en œuvre de l'invention par incidence d'un faisceau laser 5 dans le dispositif 1 de mise en forme, il convient de définir un compromis entre l'angle de faisceau $\alpha$, la longueur L du dispositif et son angle d'ouverture $\beta$. D'autres paramètres doivent également être considérés tels que les dimensions des ouvertures d'entrée $L_e$, de sortie $L_0$ ainsi que la position du point de focalisation $L_p$.

Concernant la convergence du faisceau incident, si elle est trop faible, les rayons périphériques ne seront pas réfléchis, ce qui va à l'encontre d'une homogénéisation de la répartition énergétique du faisceau laser 5 sortant. Dans le cas d'un faisceau gaussien par exemple, la répartition énergétique du faisceau laser 5 restera supérieure au centre au détriment de la périphérie. Inversement, si la convergence est trop importante, les rayons périphériques subiront de nombreuses réflexions, au détriment du rendement énergétique.

Concernant l'angle d'ouverture β, le phénomène est comparable. Un angle d'ouverture (β) trop important restreint l'homogénéité du faisceau laser 5 sortant et donc la qualité de la mise en forme.

Aussi, une relation spécifique entre la convergence (α) du faisceau incident et l'angle d'ouverture (β) peut être avancée qui établit des zones de fonctionnement se traduisant par un choix de paramètres géométriques du guide. D'une manière générale, il est nécessaire que l'angle de convergence (α) soit plus grand que l'angle d'ouverture (β) afin que les rayons les plus externes du faisceau puissent être réfléchis au moins une fois.

La relation liant l'angle limite $\alpha_L$ en-dessous duquel il n'y a pas homogénéisation est du type :

$$(L - L_p).tg\left(\frac{\alpha_L}{2}\right) = L.tg\left(\frac{L_e}{2.L} + \frac{\beta}{2}\right)$$

Structurellement, le dispositif 1 de l'invention comporte une structure rigide qui forme un conduit 6 destiné à être traversé par les rayons du faisceau laser 5 mis en forme. Ce conduit 6 comporte ainsi à chacune de ses extrémités un orifice, l'un d'entrée 2, l'autre de sortie 3.

Selon un mode de réalisation préféré mais non limitatif de l'invention, cette structure 6 rigide du dispositif est sensiblement rectiligne selon un axe moyen. Cet axe moyen peut être un axe perpendiculaire à une section du dispositif 1, centré au niveau de la section du dispositif 1, ou encore passant par un axe ou un point de symétrie d'une section du dispositif 1.

Selon une première alternative de réalisation, la paroi interne 4 de la structure 6 rigide est rendue réfléchissante avec un aspect de type poli miroir par un ou plusieurs traitements de surface ou par usinage. Un état de surface trop rugueux serait à l'origine de pertes énergétiques et diminuerait le rendement global du dispositif 1.

Selon une seconde alternative de réalisation, la paroi interne 4 de la structure 6 rigide est rendu réfléchissante par positionnement d'au moins une lame 4 sur la face interne de la structure rigide. Cette lame forme alors un chemisage de la face interne 4 de la structure rigide 6. Cette solution alternative permet d'éviter un usinage à l'intérieure d'une structure fermée qui est une solution coûteuse.

Selon une particularité de réalisation non limitative de l'invention, la paroi interne 4 du dispositif 1 de mise en forme de l'invention peut comporter une ou plusieurs facettes. Ce nombre de facettes peut dépendre de la forme d'au moins un des orifices du conduit 6 et notamment de la forme de l'orifice 3 de sortie du dispositif. Ce nombre de facettes permet ainsi d'imposer une forme géométrique particulière au faisceau laser 5 en sortie du dispositif 1. Ainsi, le dispositif 1 peut présenter une section de forme circulaire, ovoïde ou elliptique avec une facette unique à l'ensemble de la paroi interne 4 du dispositif 1. De même, le dispositif 1, lorsqu'il comporte plusieurs facettes, peut présenter une section de forme polygonale, par exemple rectangulaire ou carrée.

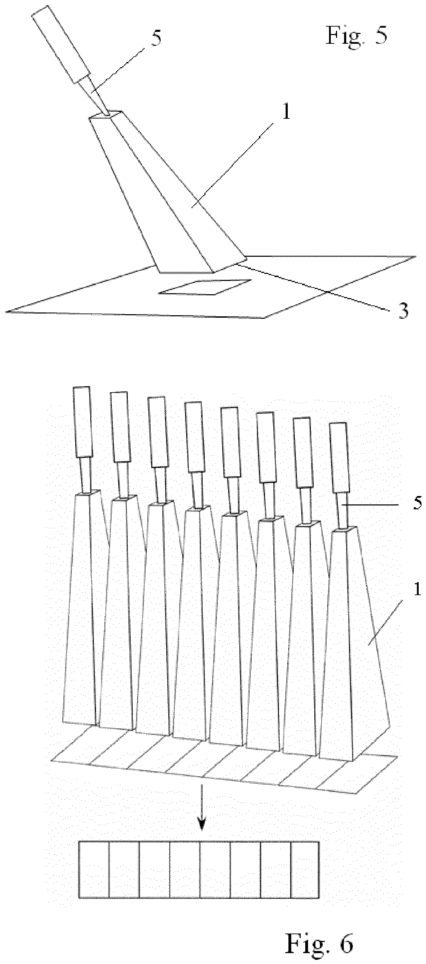

Selon un mode de réalisation particulier du dispositif 1 qui n'est pas limitatif de l'invention, ce dispositif 1 présente un orifice 3 de sortie formé par une section agencée dans un plan disposé en biais par rapport à l'axe moyen du conduit du dispositif. Un exemple de réalisation est représenté sur la figure 5.

Par ailleurs, le nombre de facettes entre l'orifice 2 d'entrée et l'orifice 3 de sortie du dispositif 1 de mise en forme peut varier. De même, la forme de ces parois 4 ou facettes réfléchissantes peut être de différents types : plane, concave, convexe ou de toutes formes souhaitées.

Selon une particularité de réalisation non limitative de l'invention, le dispositif 1 intègre des moyens de cloisonnement des orifices. Ces moyens de cloisonnement forment ainsi des hublots positionnés en entrée 2 et en sortie 3 du dispositif pour maintenir, à l'intérieur du conduit du dispositif 1, un milieu spécifique ou bien encore pour éviter toute pollution extérieure de l'intérieur du conduit. Ce milieu spécifique peut être formé par un liquide ou un gaz particulier, voire un solide particulier.

Par ailleurs, au niveau de l'orifice 3 de sortie du dispositif 1, l'ensemble de mise en forme de l'invention peut intégrer une optique permettant de compléter la mise en forme du faisceau laser 5 en redimensionnant la taille de ce faisceau 5.

L'ensemble de mise en forme peut également être associé à un dispositif de refroidissement par air ou par eau. Ce dispositif étant associé à l'ensemble de mise en forme en fonction de la puissance du faisceau laser traité par le dispositif 1 de mise en forme de l'invention.

L'ensemble de mise en forme peut également associer un moyen générateur d'une lame d'air au niveau d'au moins un des orifices du dispositif 1, notamment de l'orifice 3 de sortie, pour limiter une éventuelle pollution des constituants du dispositif 1 de mise en forme.

Les différents éléments qui composent ou sont associés, voire intégrés à l'ensemble de mise en forme sont maintenus en positions les uns par rapport aux autres grâce à une structure de support adaptée.

Selon une particularité de réalisation, le dispositif 1 intégré à l'ensemble de mise en forme de rayons lumineux est utilisé dans un système particulier de l'invention. Ce système fait intervenir au moins deux ensembles de mise en forme positionnés côte à côte, chacun traitant un signal lumineux respectif formé par un faisceau indépendant. Les différents ensembles de ce système peuvent être disposés selon le cas en colonne, en ligne, en diagonale et/ou selon toutes combinaisons lignes/colonnes/diagonales. Ce système permet ainsi de créer un faisceau combiné étendu au niveau duquel les densités d'énergie peuvent être modulées localement par action sur la puissance des faisceaux incidents respectifs.

Il est bien entendu que le dispositif de mise en forme de l'invention est adapté pour fonctionner pour une large gamme de longueurs d'ondes, comprise notamment entre l'ultra-violet et l'infrarouge.

**Revendications**

1. Ensemble associant une source laser (5) avec un dispositif (1) de mise en forme optique, géométrique et énergétique des rayons lumineux d'un faisceau laser (5) qui le traverse, **caractérisé en ce que** le dispositif (1) de mise en forme est formé par un conduit (6) comportant un orifice (2) d'entrée, un orifice (3) de sortie et une paroi interne (4), réalisée par une ou plusieurs facettes, adaptée, grâce à un angle d'ouverture non-nul, pour réorienter par une seule et unique réflexion la partie réfléchie des rayons du faisceau (5) traversant, au moins une caractéristique géométrique du dispositif (1) de mise en forme étant arrangée en fonction d'au moins une caractéristique du faisceau laser (5) pour réorienter la partie des rayons située sur la périphérie du faisceau laser (5), de sorte que le rapport entre cette partie et une surface d'une section du faisceau laser (5) définit les propriétés optiques, géométriques et énergétiques du faisceau laser (5) en sortie (3) du dispositif (1), la caractéristique géométrique du dispositif (1) de mise en forme étant contenue dans une liste comprenant au moins :

   - la dimension (Le) d'ouverture de l'orifice (2) d'entrée du dispositif (1),
   - la dimension (Lo) d'ouverture de l'orifice (3) de sortie du dispositif (1),
   - la forme de l'orifice (3) de sortie du dispositif (1),
   - la longueur (L) du dispositif (1),
   - la position du point de focalisation (Lp) du faisceau laser à l'entrée (2) du dispositif (1),
   - l'angle ($\alpha$) de focalisation du faisceau laser à l'entrée (2) du dispositif (1),
   - la forme du conduit réalisant un guide d'onde
   - l'angle d'ouverture ($\beta$) du dispositif (1),

   de sorte que la relation entre l'angle du faisceau incident ($\alpha$) et l'angle d'ouverture ($\beta$) définit l'angle limite ($\alpha_L$) en-dessous duquel il n'y a pas d'homogénéisation par la relation :

   $$(L - L_p).tg\left(\frac{\alpha_L}{2}\right) = L.tg\left(\frac{L_e}{2.L} + \frac{\beta}{2}\right)$$

2. Ensemble selon la revendication 1, **caractérisé en ce que** le dispositif de mise en forme (1) est arrangé pour réorienter la partie des rayons située sur la périphérie du faisceau laser (5) de sorte que le rapport entre la partie réorientée ou réfléchie et la partie non-réfléchie du faisceau laser (5) corresponde à une valeur préférentiellement comprise entre 0,12 et 0,62, pour obtenir un faisceau laser (5) en sortie (3) de dispositif (1) comportant une répartition homogène de ses rayons lumineux et un rendement énergétique optimal par rapport au faisceau laser (5) en entrée (2) du dispositif (1).

3. Ensemble selon la revendication précédente, **caractérisé en ce que** le rapport entre cette partie et la surface d'une section du faisceau laser (5) a une valeur égale à 0,37.

4. Ensemble selon une des revendications précédentes, **caractérisé en ce que** le dispositif (1) comprend une structure porteuse rigide qui forme un conduit (6) destiné à être traversé par les rayons du faisceau (5) lumineux et au moins une paroi interne (4) réalisée par une face recouverte d'un chemisage réfléchissant.

5. Ensemble selon une des revendications précédentes, **caractérisé en ce que** le dispositif (1) comprend des moyens de cloisonnement des orifices formant des hublots en entrée (2) et en sortie (3) du dispositif pour maintenir un milieu spécifique à l'intérieur du dispositif ou éviter toute pollution extérieure de l'intérieur du conduit.

6. Ensemble selon une des revendications 1 à 5, **caractérisé en ce que** le dispositif (1) présente une section circulaire ou elliptique.

7. Ensemble selon une des revendications 1 à 5, **caractérisé en ce que** le dispositif (1) présente une section polygonale, par exemple rectangulaire ou carré.

8. Ensemble selon une des revendications 1 à 5, **caractérisé en ce que** le dispositif (1) présente un orifice de sortie formé par une section agencée dans un plan disposé en biais par rapport à l'axe moyen du conduit.

9. Ensemble selon une des revendications 1 à 8 **caractérisé en ce qu'**il comprend également un système optique pour concentrer les rayons du faisceau (5) en direction de l'orifice d'entrée (2) du dispositif (1) de mise en forme.

10. Système **caractérisé en ce qu'**il comporte au moins deux ensembles de mise en forme de rayons lumineux selon l'une des revendications précédentes positionnés côte à côte, ces deux ensembles opérant des mises en forme de leurs faisceau lumineux (5) respectifs de façon indépendante l'une par rapport à l'autre.

**Patentansprüche**

1. Anordnung, die eine Laserquelle (5) mit einer Vorrichtung (1) zur optischen, geometrischen und energetischen Formung der Lichtstrahlen eines Laserbündels (5), das sie durchläuft, verbindet, **dadurch gekennzeichnet, dass** die Formungsvorrichtung (1) von einer Leitung (6) gebildet ist, die eine Einlassöffnung (2), eine Auslassöffnung (3) und eine Innenwand (4), die von einer oder mehreren Facetten gebildet ist, aufweist, die aufgrund eines Öffnungswinkels ungleich null geeignet ist, durch eine einzige Reflexion den reflektierten Anteil der Strahlen des hindurchlaufenden Bündels (5) neu zu orientieren, wobei mindestens ein geometrisches Merkmal der Formungsvorrichtung (1) in Abhängigkeit von mindestens einem Merkmal des Laserbündels (5) angeordnet ist, den Anteil der Strahlen, der sich auf der Peripherie des Laserbündels (5) befindet, so neu zu orientieren, dass das Verhältnis zwischen diesem Anteil und einer Fläche eines Querschnitts des Laserbündels (5) die optischen, geometrischen und energetischen Eigenschaften des Laserbündels (5) am Auslass (3) der Vorrichtung (1) definiert, wobei das geometrische Merkmal der Formungsvorrichtung (1) in einer Liste enthalten ist, die wenigstens Folgendes umfasst:

   - die Öffnungsabmessung (Le) der Einlassöffnung (2) der Vorrichtung (1),
   - die Öffnungsabmessung (Lo) der Auslassöffnung (3) der Vorrichtung (1),
   - die Form der Auslassöffnung (3) der Vorrichtung (1),
   - die Länge (L) der Vorrichtung (1),
   - die Position des Fokuspunkts (Lp) des Laserbündels am Einlass (2) der Vorrichtung (1),
   - den Fokuswinkel ($\alpha$) des Laserbündels am Einlass (2) der Vorrichtung (1),
   - die Form der Leitung, die einen Wellenleiter bildet
   - den Öffnungswinkel ($\beta$) der Vorrichtung (1),

   so dass das Verhältnis zwischen dem Winkel des einfallenden Bündels ($\alpha$) und dem Öffnungswinkel ($\beta$) den Grenzwinkel ($\alpha_L$), unter welchem keine Homogenisierung vorliegt, durch das folgende Verhältnis definiert:

$$(L - L_p).tg\left(\frac{\alpha_L}{2}\right) = L.tg\left(\frac{L_e}{2.L} + \frac{\beta}{2}\right)$$

2. Anordnung nach Anspruch 1, **dadurch gekennzeichnet, dass** die Formungsvorrichtung (1) angeordnet ist, den Anteil der Strahlen, der sich auf der Peripherie des Laserbündels (5) befindet, so neu zu orientieren, dass das Verhältnis zwischen dem neu orientierten oder reflektierten Anteil und dem nicht reflektieren Anteil des Laserbündels (5) einem Wert entspricht, der vorzugsweise zwischen 0,12 und 0,62 liegt, um ein Laserbündel (5) am Auslass (3) der Vorrichtung (1) zu erhalten, das eine homogene Verteilung seiner Lichtstrahlen und eine optimale energetische Leistung im Verhältnis zum Laserbündel (5) am Einlass (2) der Vorrichtung (1) aufweist.

3. Anordnung nach dem vorhergehenden Anspruch, **dadurch gekennzeichnet, dass** das Verhältnis zwischen diesem Anteil und der Fläche eines Querschnitts des Laserbündels (5) einen Wert gleich 0,37 aufweist.

4. Anordnung nach einem der vorhergehenden Ansprüche, **dadurch gekennzeichnet, dass** die Vorrichtung (1) eine starre Tragstruktur, die eine Leitung (6) bildet, die dazu bestimmt ist, von den Strahlen des Lichtbündels (5) durchlaufen zu werden, und mindestens eine Innenwand (4) aufweist, die von einer Fläche gebildet ist, die mit einer reflektierenden Verkleidung bedeckt ist.

5. Anordnung nach einem der vorhergehenden Ansprüche, **dadurch gekennzeichnet, dass** die Vorrichtung (1) Mittel zur Abtrennung der Öffnungen umfasst, die Fenster am Einlass (2) und am Auslass (3) der Vorrichtung bilden, um ein spezifisches Milieu im Inneren der Vorrichtung beizubehalten oder jegliche äußere Verschmutzung des Inneren der Leitung zu vermeiden.

6. Anordnung nach einem der Ansprüche 1 bis 5, **dadurch gekennzeichnet, dass** die Vorrichtung (1) einen kreis- oder ellipsenförmigen Querschnitt aufweist.

7. Anordnung nach einem der Ansprüche 1 bis 5, **dadurch gekennzeichnet, dass** die Vorrichtung (1) einen mehreckigen, zum Beispiel rechteckigen oder quadratischen Querschnitt aufweist.

8. Anordnung nach einem der Ansprüche 1 bis 5, **dadurch gekennzeichnet, dass** die Vorrichtung (1) eine Auslassöffnung aufweist, die von einem Querschnitt gebildet ist, der in einer Ebene angeordnet ist, die schräg zur Mittelachse der Leitung angeordnet ist.

9. Anordnung nach einem der Ansprüche 1 bis 8, **dadurch gekennzeichnet, dass** sie ebenfalls ein optisches System umfasst, um die Strahlen des Bündels (5) in Richtung der Einlassöffnung (2) der Formungsvorrichtung (1) zu bündeln.

10. System, **dadurch gekennzeichnet, dass** es mindestens zwei Anordnungen zur Formung von Lichtstrahlen nach einem der vorhergehenden Ansprüche aufweist, die Seite an Seite positioniert sind, wobei diese zwei Anordnungen Formungen ihrer jeweiligen Lichtbündel (5) unabhängig voneinander durchführen.

**Claims**

1. Assembly associating a laser source (5) with a device (1) for optically, geometrically and energetically shaping the light rays of a laser beam (5) that passes therethrough, **characterized in that** the shaping device (1) is formed by a duct (6) comprising an entrance orifice (2), an exit orifice (3) and an internal wall (4), which is formed by one or more facets, and which is able, by virtue of a nonzero aperture angle, to reorient, via one and only one reflection, the reflected portion of the rays of the beam (5) passing through, at least one geometric characteristic of the shaping device (1) being arranged depending on at least one characteristic of the laser beam (5) to reorientate the portion of the rays that is located on the periphery of the laser beam (5), so that the ratio between this portion and an area of a cross section of the laser beam (5) defines the optical, geometric and energetic properties of the laser beam (5) at the exit (3) of the device (1), the geometric characteristic of the shaping device (1) being contained in a list comprising at least:

- the aperture dimension (Le) of the entrance orifice (2) of the device (1),
- the aperture dimension (Lo) of the exit orifice (3) of the device (1),
- the shape of the exit orifice (3) of the device (1),
- the length (L) of the device (1),
- the position of the focal point (Lp) of the laser beam with respect to the entrance (2) of the device (1),
- the focal angle ($\alpha$) of the laser beam at the entrance (2) of the device (1),
- the shape of the duct forming a waveguide
- the opening angle ($\beta$) of the device (1),

so that the relationship between the angle ($\alpha$) of the incident beam and the opening angle ($\beta$) defines the limiting angle ($\alpha_L$) below which there is no homogenization by the relationship:

$$\left(L - L_p\right).tg\left(\frac{\alpha_L}{2}\right) = L.tg\left(\frac{L_e}{2.L} + \frac{\beta}{2}\right).$$

2. Assembly according to Claim 1, **characterized in that** the shaping device (1) is arranged to reorient the portion of the rays that is located on the periphery of the laser beam (5) so that the ratio between the reoriented or reflected portion and the non-reflected portion of the laser beam (5) corresponds to a value preferably comprised between 0.12 and 0.62, in order to obtain a laser beam (5) at the exit (3) of the device (1) that comprises a homogenous distribution of its light rays and an optimal energy efficiency with respect to the laser beam (5) at the entrance (2) of the device (1).

3. Assembly according to the preceding claim, **characterized in that** the ratio between this portion and the area of a cross section of the laser beam (5) has a value equal to 0.37.

4. Assembly according to one of the preceding claims, **characterized in that** the device (1) comprises a rigid carrier structure that forms a duct (6) intended to be passed through by the rays of the light beam (5) and at least one internal wall (4) formed by a face covered with a reflective jacket.

5. Assembly according to one of the preceding claims, **characterized in that** the device (1) comprises means for making the orifices partitions forming portholes at the entrance (2) and exit (3) of the device, in order to keep a specific medium inside the device or prevent any exterior contamination of the interior of the device.

6. Assembly according to one of Claims 1 to 5, **characterized in that** the device (1) has a circular or elliptical cross section.

7. Assembly according to one of Claims 1 to 5, **characterized in that** the device (1) has a polygonal cross section, for example a rectangular or square cross section.

8. Assembly according to one of Claims 1 to 5, **characterized in that** the device (1) has an exit orifice formed by a cross section arranged in a plane placed slanting with respect to the mean axis of the duct.

9. Assembly according to one of Claims 1 to 8, **characterized in that** it also comprises an optical system for concentrating the rays of the beam (5) in the direction of the entrance orifice (2) of the shaping device (1).

10. System, **characterized in that** it comprises, positioned side-by-side, at least two assemblies for shaping light rays according to one of the preceding claims, these two assemblies shaping their respective light beams (5) independently of each other.

Fig. 1

Fig. 2

Fig. 3

Fig. 4a

Fig. 4b

Fig. 4c

Fig. 5

Fig. 6

**Fig.7**

**Fig.8**

théorique
expérimental

Fig. 9

Fig 10

5/5

**EP 2 615 486 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009174867 A1